# EUROPEAN PATENT APPLICATION

(11) **EP 4 836 145 A1**
(43) Date of publication of application: **04.11.2026**
(21) Application number: 26164251.6
(22) Date of filing: 12.03.2026
(51) Int. Cl.: H01M 50/264, H01M 50/209

(54) **BATTERY MODULE**

(30) Priority: 28.04.2025 KR 20250055349
(71) Applicant: SAMSUNG SDI CO., LTD., Yongin-si, Gyeonggi-do 17084 (KR)
(72) Inventor: LEE, Hyeok, 17084 Yongin-si, Gyeonggi-do (KR)
(74) Representative: Bardehle Pagenberg Partnerschaft mbB Patentanwälte Rechtsanwälte

(57) **Abstract**

A battery module includes battery cells arranged such that main surfaces of the battery cells are adjacent to each other in a first direction, a first plate portion on a main surface of a battery cell located at an outermost end among the battery cells, the first plate portion including a first material, a second plate portion located on side surfaces of the battery cells, the second plate portion including a second material, and a coupling portion between the first plate portion and the second plate portion and coupling the first plate portion and the second plate portion. The coupling portion includes a first material layer including the first material and a second material layer located on one surface and another surface of the first material layer, surrounding one or more edges of the first material layer, and including the second material.

## Description

### CROSS-REFERENCE TO RELATED APPLICATION

The present application claims priority to and the benefit of Korean Patent Application No. 10-2025-0055349, filed on April 28, 2025, in the Korean Intellectual Property Office, the entire disclosure of which is incorporated herein by reference.

### BACKGROUND

### 1. Field

The disclosure relates to a battery module.

### 2. Description of the Related Art

Secondary batteries may be charged and discharged, unlike primary batteries that cannot be recharged. Low-capacity battery cells have been used in small portable electronic devices, such as smartphones, feature phones, laptop computers, digital cameras, and camcorders, whereas large-capacity battery cells have been widely used as power sources for driving motors in hybrid and electric vehicles and as power storage cells. Battery cells include an electrode assembly including a positive electrode and a negative electrode, a case housing the electrode assembly, and electrode terminals connected to the electrode assembly.

Large-capacity battery cells may be used as battery modules in which a number of battery cells are connected in series and/or parallel to provide high energy density (e.g., for driving a motor in a hybrid vehicle).

Additionally, in the battery module, a plurality of battery cells may be housed within an area bounded by a pair of side plates, a pair of end plates, and a bottom plate. In order to connect these plates, similar materials are used to achieve high bonding strength between each plate.

In the related art battery module, the same material is used between the plates to connect each plate, and thus the range of materials that may be used for each plate is limited.

The above-described information disclosed in the background technology of this disclosure is only intended to improve understanding of the background of the disclosure, and therefore may include information that does not constitute prior art.

### SUMMARY

Embodiments of the disclosure provide a battery module in which battery plates including different metals are readily bonded to each other.

Embodiments of the disclosure provide a battery module configured to expand the range of selections of materials included in a battery plate.

Embodiments of the disclosure provide a battery module having improved structural stability.

However, the technical problems to be solved by the disclosure are not limited to the problems described above, and other problems not mentioned may be clearly understood by those skilled in the art from the description of the invention described below.

An embodiment of the present disclosure provides a battery module including battery cells arranged such that main surfaces of the battery cells are adjacent to each other in a first direction, a first plate portion located on a main surface of a battery cell located at an outermost end among the battery cells, the first plate portion including a first material, a second plate portion located on side surfaces of the battery cells, the second plate portion including a second material, and a coupling portion between the first plate portion and the second plate portion and coupling the first plate portion to the second plate portion. The coupling portion includes a first material layer including the first material and a second material layer located on one surface and another surface of the first material layer, surrounding one or more edges of the first material layer, and including the second material.

In some embodiments, the first plate portion may further include a recess portion and the coupling portion may be accommodated in the recess.

In some embodiments, the second material layer may include at least one opening on a surface adjacent to the second plate portion.

In some embodiments, the surface adjacent to the second plate portion may include two openings, and preferably the two openings may be substantially symmetric with respect to an imaginary vertical line passing through a center of the surface adjacent to the second plate portion.

In some embodiments, M according to Formula 1 may be in a range from approximately 0.5 to approximately 2, $M = L 1 / L 2$ Formula 1 where L1 is a width in a direction perpendicular to the imaginary vertical line between the two openings, and L2 is a width of each of the two openings in the direction perpendicular to the imaginary vertical line.

In some embodiments, the battery module may further include a first joint portion connecting the first plate portion to the first material layer and/or a second joint portion connecting the second plate portion to the second material layer.

In some embodiments, the first joint portion may be located on an imaginary line extending from one of the two openings to the first material portion.

In some embodiments, the second joint portion may be located in a region that does not overlap the two openings.

In some embodiments, one or more edges of the second material layer and the first material layer may be spaced apart from each other in the first direction.

In some embodiments, N according to Formula 2 may be in a range from approximately 0.3 to approximately 0.5, $N = L 3 / L 4$ Formula 2 where L3 is a thickness of the first material layer, and where L4 is a thickness of the coupling portion.

Another embodiment of the disclosure provides a battery module including battery cells arranged such that main surfaces of the battery cells are adjacent to each other in a first direction, a first plate portion located on a main surface of a battery cell located at an outermost end among the battery cells, the first plate portion including a first material, a second plate portion located on side surfaces of the battery cells, the second plate portion including a second material, and a coupling portion arranged between the first plate portion and the second plate portion and coupling the first plate portion and the second plate portion. The coupling portion includes a first material layer including the first material and a second material layer including the second material, the second material layer includes a first region adjacent to the first plate portion, a second region adjacent to the second plate portion, and a connection portion bent such that the first region overlaps the second region to connect the first region to the second region. The first material layer is located between the first region and the second region.

In some embodiments, the first plate portion may further include a recess portion and, optionally, the coupling portion may be accommodated in the recess.

In some embodiments, the second material layer may include at least one opening on a surface adjacent to the second plate portion.

In some embodiments, the surface adjacent to the second plate portion may include two openings, and preferably the two openings may be substantially symmetric with respect to an imaginary vertical line passing through a center of the surface adjacent to the second plate portion.

In some embodiments, M according to Formula 1 may be in a range from approximately 0.5 to approximately 2, $M = L 1 / L 2$ Formula 1 where L1 is a width in a direction perpendicular to the imaginary vertical line between the two openings, and where L2 is a width of each of the two openings in the direction perpendicular to the imaginary vertical line.

In some embodiments, the battery module may further include a first joint portion connecting the first plate portion to the first material layer and/or a second joint portion connecting the second plate portion to the second material layer.

In some embodiments, the first joint portion may be located on an imaginary line extending from one of the two openings to the first material portion and, optionally, the first joint portion may penetrate through the first region.

In some embodiments, the second joint portion may be located in the second region that does not include the two openings.

In some embodiments, the connection portion may be spaced apart from the first material layer.

In some embodiments, N according to Formula 2 may be in a range from approximately 0.3 to approximately 0.5 $N = L 3 / L 4$ Formula 2 where L3 is a thickness of the first material layer, and where L4 is a thickness of the coupling portion.

### BRIEF DESCRIPTION OF THE DRAWINGS

The following drawings attached to this specification illustrate embodiments of the disclosure, and together with the detailed description of the invention described below, serve to further understand the technical idea of the disclosure, and therefore, the disclosure should not be interpreted as being limited to matters described in such drawings:
FIG. 1 is a perspective view schematically illustrating an example of a battery module according to some embodiments of the present disclosure;
FIG. 2 is a perspective view schematically illustrating an example of a battery cell of the battery module of FIG. 1;
FIG. 3 is a cross-sectional view taken along line III-III' of FIG. 2;
FIG. 4 is an exploded perspective view schematically illustrating an example of plates of the battery module of FIG. 1 according to an embodiment of the present disclosure;
FIG. 5A is a perspective view illustrating a coupling portion coupled to a first plate portion in the battery module according to FIG. 4;
FIG. 5B is a side view schematically illustrating an example of the battery module according to FIG. 5A;
FIG. 6A is a perspective view illustrating a second plate portion coupled to a coupling portion in the battery module according to FIG. 5A;
FIG. 6B is a side view schematically illustrating an example of the battery module according to FIG. 6A;
FIG. 7 is a cross-sectional view schematically illustrating an example of a cross-section taken along line IV-IV' in FIG. 6A;
FIG. 8A is a perspective view illustrating a coupling portion of a battery module according to some embodiments of the disclosure; and
FIG. 8B is an exploded perspective view of the coupling portion of FIG. 8A.

### DETAILED DESCRIPTION

The disclosure may include various modifications and embodiments, and specific embodiments are illustrated in the drawings and are described in detail in the detailed description. However, it should be understood that the disclosure is not limited to the specific embodiments, but includes all modifications, equivalents, and substitutes included in the spirit and technical scope of the disclosure. In the following description of the disclosure, a detailed description of known functions and configurations incorporated herein will be omitted when it may make the subject matter of the disclosure rather unclear.

It will be understood that, although the terms first, second, etc. may be used herein to describe various components, these components should not be limited by these terms. The terms are used only for the purpose of distinguishing one component from other components.

The terminology used herein is for the purpose of describing particular embodiments only and is not intended to be limiting of the disclosure. As used herein, the singular forms "a," "an", and "the" are intended to include the plural forms as well, unless the context clearly indicates otherwise. In addition, in each drawing, components are exaggerated, omitted, or schematically illustrated for convenience and clarity of description, and the size of each component is not entirely reflective.

In the description of each component, in the case in which it is described as being formed "on" or "under", "on" and "under" include all formed directly or with other components therebetween, and the criteria of "on" and "under" will be described with respect to the drawings.

Hereinafter, embodiments of the disclosure will be described in detail with reference to the accompanying drawings, and in the description with reference to the accompanying drawings, the same or corresponding components are given the same reference numerals, and redundant descriptions thereof will be omitted.

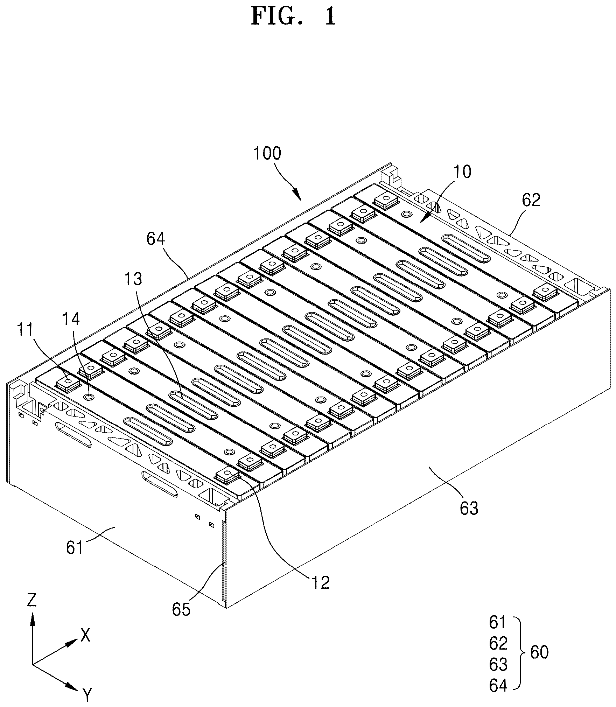

FIG. 1 is an exploded perspective view schematically illustrating an example of a battery module 100 according to some embodiments of the present disclosure.

Referring to FIG. 1, the battery module 100 in some embodiments of the present disclosure may include a plurality of battery cells 10 arranged in one direction (e.g., the X direction) and a housing portion 60 housing (accommodating) the plurality of battery cells 10.

In one or more embodiments, the battery cell 10 may include a cylindrical battery cell, a pouch-type battery cell, or a prismatic battery cell.

In some embodiments, the housing portion 60 may include end plate portions 61 and 62, side plate portions 63 and 64, a bottom plate, and an upper cover.

The plurality of battery cells 10 arranged in the one direction may be housed (accommodated) by the housing portion 60.

In some embodiments, the end plate portions 61 and 62 may be on a main surface of the battery cells 10 that are located at the outermost ends among the plurality of battery cells 10 arranged in the one direction.

In some embodiments, the side plate portions 63 and 64 may be on the sides of the plurality of battery cells 10 arranged in the one direction.

In some embodiments, the bottom plate may be on the bottom surface of each of the plurality of battery cells 10 arranged in the one direction.

In some embodiments, the upper cover may be on or above the plurality of battery cells 10 arranged in one direction.

The end plate portions 61 and 62, the side plate portions 63 and 64, the bottom plate, and the upper cover may be coupled together by a depression-protrusion coupling, fitting coupling, or coupling by a member, etc., to form the housing portion 60 and the coupling method is not limited thereto.

An internal space in which the plurality of battery cells 10 may be arranged may be formed by the housing portion 60, and the plurality of battery cells 10 may be arranged (accommodated) in the internal space formed by the housing portion 60.

The battery module 100 according to the present embodiment may further include a busbar that electrically connects one battery cell 10 to another battery cell 10 adjacent thereto.

A first terminal 11 of one battery cell 10 may be electrically connected to a second terminal 12 of another adjacent battery cell 10 through a busbar, and the second terminal 12 of one battery cell 10 may be electrically connected to the first terminal 11 of another adjacent battery cell 10 through another busbar. Although FIG. 1 illustrates a serial connection, the disclosure is not limited thereto, and various connection structures may be adopted. In some embodiments, the number and arrangement of battery cells 10 are not limited to the structure shown in FIG. 1 and may be changed.

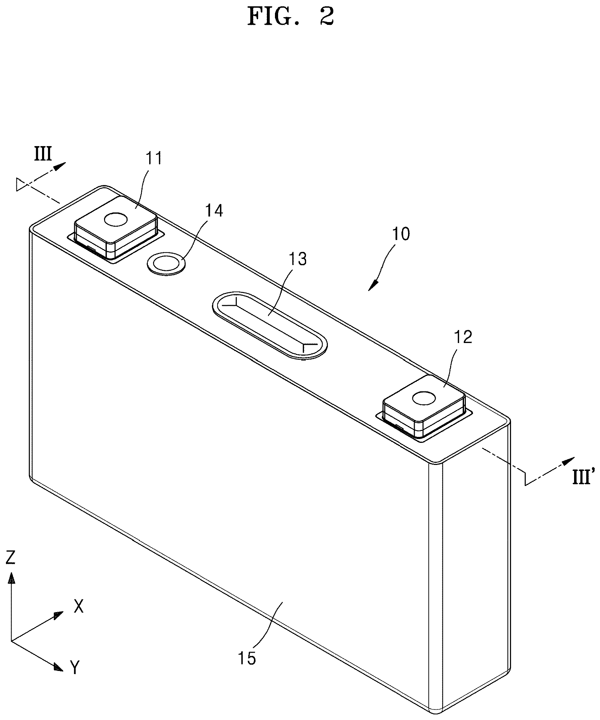

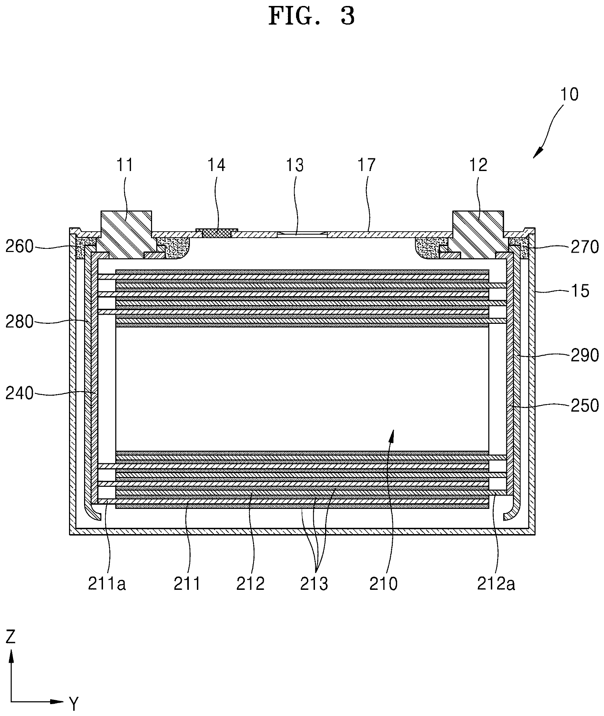

FIG. 2 is a perspective view schematically illustrating an embodiment of the battery cell 10 of the battery module of FIG. 1, and FIG. 3 is a cross-sectional view schematically illustrating an embodiment of a cross-section taken along line III-III' of FIG. 2.

Referring to FIGS. 2 and 3 together, the battery cell 10 according to one embodiment may include at least one electrode assembly 210 wound with a separator 213 (configured to function as an insulator) between a positive electrode 211 and a negative electrode 212 and a case 15 in which the electrode assembly 210 is housed (accommodated).

The battery cell 10 according to one embodiment is described as a prismatic lithium ion battery cell as an example. However, the disclosure is not limited thereto, and the battery module 100 may include any other suitable type(s) of battery cells, such as lithium polymer battery cells or cylindrical battery cells.

The positive electrode 211 and the negative electrode 212 may include a coated portion, which is a region in which an active material is applied to a current collector including a thin metal foil, and uncoated portions 211a and 212a, which are regions in which the active material is not applied.

The positive electrode 211 and the negative electrode 212 are wound with the separator 213, which is an insulator, therebetween. However, the present disclosure is not limited thereto, and the electrode assembly 210 may have a structure in which a positive electrode and a negative electrode including a plurality of sheets are alternately stacked (e.g., laminated) laminated with a separator therebetween.

The case 15 may form the overall appearance of the battery cell 10 and may include a conductive metal, such as aluminum, aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 may include a conductive material. In one or more embodiments, the first terminal 11 and the second terminal 12 electrically connected to the positive electrode 211 and the negative electrode 212, respectively, may protrude outward by penetrating through the cap plate 17.

In some embodiments, outer peripheral surfaces of upper pillars of the first terminal 11 and the second terminal 12 protruding outward from the cap plate 17 may be threaded and fixed to the cap plate 17 with a nut.

However, the present disclosure is not limited thereto, and the first terminal 11 and the second terminal 12 may include a rivet structure and may be riveted to the cap plate 17 or may be welded to the cap plate 17.

In some embodiments, the cap plate 17 may include a thin plate and may be coupled to the opening of the case 15. An electrolyte injection port 14 may be in the cap plate 17 and a sealing plug may be installed in the electrolyte injection port 14. Additionally, a vent 13 with a notch therein may be in the cap plate 17.

The first terminal 11 and the second terminal 12 may be electrically connected to a current collector including first and second current collectors 240 and 250, respectively, (hereinafter referred to as positive and negative electrode current collectors) that are welded to a positive electrode uncoated portion 211a and a negative electrode uncoated portion 212a, respectively.

For example, the first terminal 11 and the second terminal 12 may be coupled to the positive and negative electrode current collectors 240 and 250, respectively, by welding. However, the present disclosure is not limited thereto, and the first terminal 11 and the second terminal 12 and the positive and negative electrode current collectors 240 and 250, respectively, may be integral.

In some embodiments, an insulating member may be installed between the electrode assembly 210 and the cap plate 17. In one or more embodiments, the insulating member may include first and second lower insulating members 260 and 270, and each of the first and second lower insulating members 260 and 270 may be between the electrode assembly 210 and the cap plate 17.

In some embodiments, according to the present embodiment, one end of a separating member facing one surface of the electrode assembly 210 may be between the insulating member and the first terminal 11 and the second terminal 12.

In one or more embodiments, the separating member may include first and second separating members 280 and 290.

Accordingly, one end of each of the first and second separating members 280 and 290 that face one surface of the electrode assembly 210 may be between the first and second lower insulating members 260 and 270 and the first terminal 11 and the second terminal 12, respectively.

As a result, the first terminal 11 and the second terminal 12 welded to the positive and negative electrode current collectors 240 and 250, respectively, may be coupled to one end of each of the first and second lower insulating members 260 and 270, respectively, and the first and second separating members 280 and 290, respectively.

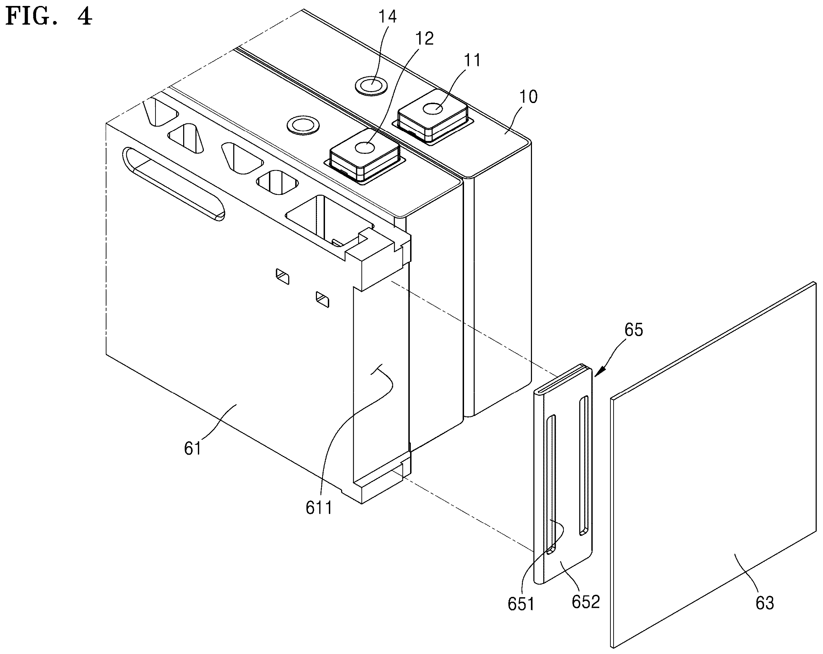

FIG. 4 is an exploded perspective view schematically illustrating an embodiment of plates of the battery module 100 of FIG. 1.

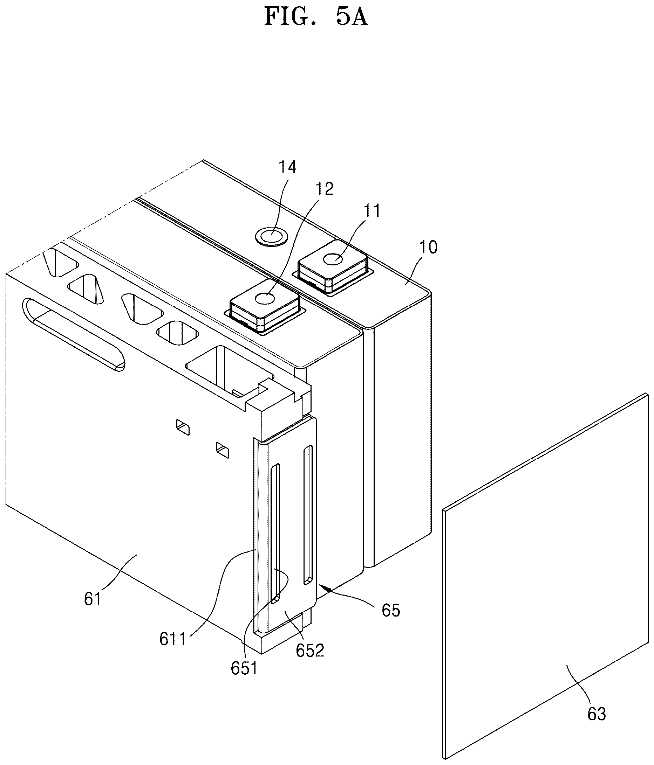

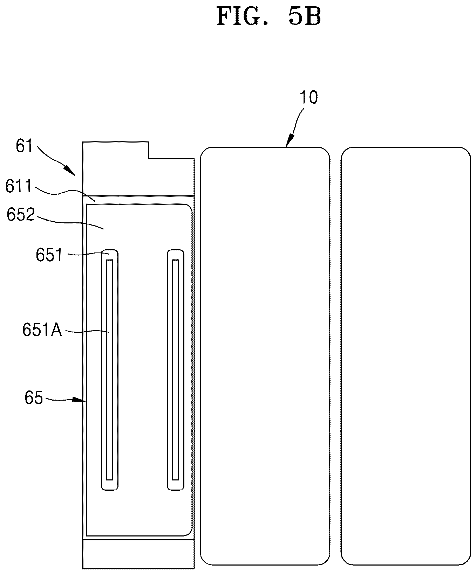

FIG. 5A is a perspective view illustrating a coupling portion 65 coupled to a first plate portion 61 in the battery module 100 according to the embodiment illustrated in FIG. 4. FIG. 5B is a side view schematically illustrating an embodiment of the battery module 100 according to FIG. 5A.

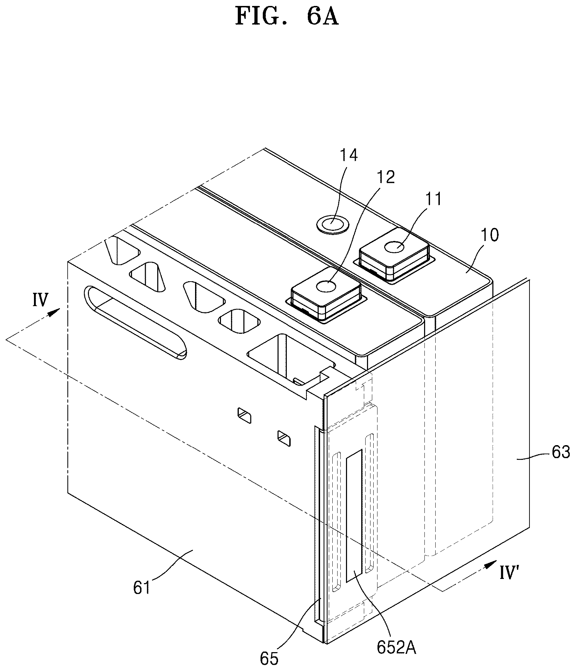

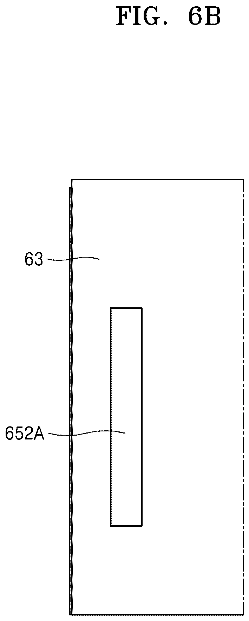

FIG. 6A is a perspective view illustrating a second plate portion 63 coupled to the coupling portion 65 in the battery module 100 according to the embodiment illustrated in FIG. 5A. FIG. 6B is a side view schematically illustrating an embodiment of the battery module 100 according to FIG. 6A.

In some embodiments of the present disclosure, the battery module 100 includes a plurality of battery cells 10, first plate portions 61 and 62, second plate portions 63 and 64, and a coupling portion 65.

The plurality of battery cells 10 may be arranged such that main surfaces thereof are adjacent to each other in a first direction (e.g., the X direction).

In one or more embodiments, the battery cell 10 may be a cylindrical battery cell, a pouch-shaped battery cell, or a prismatic battery cell, but the present disclosure is not limited to a particular battery type.

In some embodiments, the main surface may refer to a side surface surrounding the battery cell 10 and may refer to the widest surface among the side surfaces of the prismatic battery cell 10.

In some embodiments, the first direction may refer to a direction perpendicular (or substantially perpendicular) to the main surface. Referring to FIG. 1 in which the main surface is the Y direction, the first direction may be the X direction perpendicular to the Y direction.

The first plate portions 61 and 62 may be arranged on the main surface of the battery cells 10 located at the outermost ends among the plurality of battery cells 10. The first plate portions 61 and 62 may include a first material. The first plate portions 61 and 62 may be end plates.

In one or more embodiments, the first material may be aluminum (Al) but the present disclosure is not limited thereto. In an embodiment, the first material of the first plate portions 61 and 62 may be an aluminum (Al) alloy including aluminum (Al), such as an alloy (AlSi₁₀Mg) including aluminum (Al), silicon (Si), and magnesium (Mg) but the present disclosure is not limited thereto.

The second plate portions 63 and 64 are arranged on the side surface of the battery cells 10. The first plate portions 61 and 62 may include a second material. The first plate portions 61 and 62 may be side plates.

In one or more embodiments, the second material may be stainless steel, but the present disclosure is not limited thereto. In an embodiment, the second plate portions 63 and 64 may be an alloy including stainless, such as steel use stainless (SUS) series (e.g., SUS 290), but the present disclosure is not limited thereto.

The coupling portions 65 may be between the first plate portions 61 and 62 and the second plate portions 63 and 64 and connect the first plate portions 61 and 62 to the second plate portions 63 and 64.

In the related art, in order to obtain excellent bonding strength between the first plate portions 61 and 62 and the second plate portions 63 and 64, metals included in the first plate portions 61 and 62 and the second plate portions 63 and 64 are required to be the same, and thus, the range of selections of materials for the first plate portions 61 and 62 and the second plate portions 63 and 64 was limited.

In one or more embodiments, the coupling portion 65 is a structure including both the first material and the second material and may be a separate parent material placed between the first plate portions 61 and 62 including the first material and the second plate portions 63 and 64 including the second material to increase bonding between different metals.

In some embodiments, the battery module 100 further includes the coupling portions 65 to induce increased (enhanced) joining of the first plate portions 61 and 62 and the second plate portions 63 and 64 even if the first plate portions 61 and 62 and the second plate portions 63 and 64 include different metals. The coupling portions 65 also enable the first plate portions 61 and 62 and the second plate portions 63 and 64 to each include different metals, thereby obtaining the effect of expanding the range of materials that the first plate portions 61 and 62 and the second plate portions 63 and 64 may include.

The coupling portion 65 may include a first material layer 651 and a second material layer 652.

In one or more embodiments, the first material layer 651 may include the first material.

In some embodiments, the second material layer 652 may be on one surface and another surface (e.g., both surfaces that are opposite to each other) of the first material layer 651, surround one or more edges of the first material layer 651, and include the second material.

In some embodiments, the first material may be, but is not limited to, aluminum (Al). In an embodiment, the first material layer 651 may be an aluminum (Al) alloy including aluminum (Al), such as an Al 50 series alloy or an Al 60 series alloy including aluminum (Al), but the present disclosure is not limited thereto.

In some embodiments, the second material may be stainless steel, but the present disclosure is not limited thereto. In an embodiment, the second material layer 652 may be an alloy including stainless, such as SUS (steel use stainless) series (e.g., SUS 290), but the present disclosure is not limited thereto.

The second material layer 652 may include a first region 6521, a second region 6522, and a connection portion 6523.

In one or more embodiments, the first region 6521 refers to a region adjacent to one of the first plate portions 61 and 62, the second region 6522 refers to a region adjacent to one of the second plate portions 63 and 64. The connection portion 6523 may be bent such that the first region 6521 overlaps the second region 6522 to connect the first region 6521 to the second region 6522. The first material layer 651 may be between the first region 6521 and the second region 6522.

The first plate portions 61 and 62 may further include a recess portion 611 in which the coupling portion 65 is arranged (accommodated).

In one or more embodiments, the first plate portions 61 and 62 may further include the recess portion 611, and the coupling portion 65 may be inserted into and placed in (accommodated in) the recess portion 611.

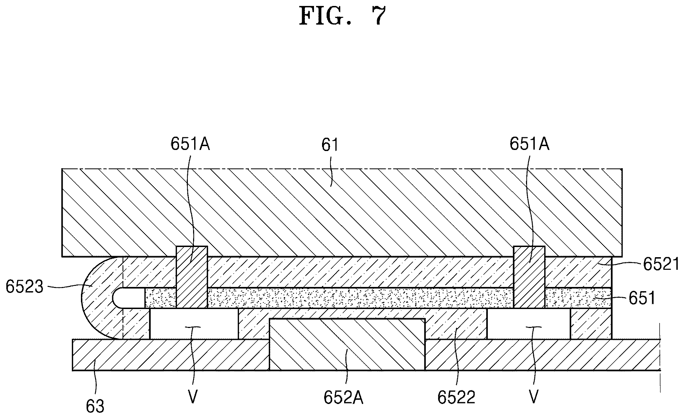

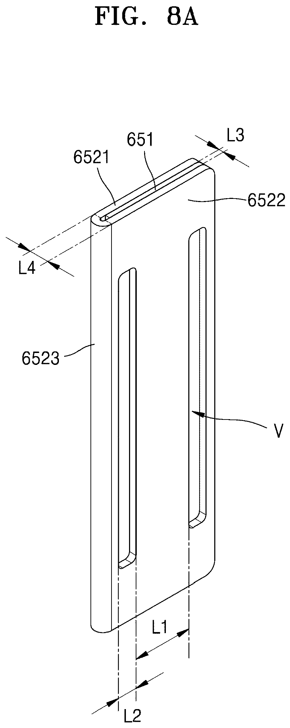

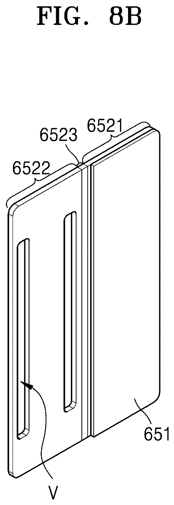

FIG. 7 is a cross-sectional view schematically illustrating an embodiment of a cross-section taken along line the IV-IV' of FIG. 6A. FIG. 8A is a perspective view illustrating the coupling portion 65 of the battery module 100 in some embodiments of the present disclosure. FIG. 8B is an exploded perspective view of the coupling portion 65 of FIG. 8A.

The second material layer 652 may include one or more openings V on a surface adjacent to one of the second plate portions 63 and 64. In one or more embodiments, the surface adjacent to one of the second plate portions 63 and 64 includes two openings V (e.g., two vacancies), and the two openings V may be arranged symmetrically (or substantially symmetrically) with respect to an imaginary vertical line passing through the center of the surface adjacent to one of the second plate portions 63 and 64.

In one or more embodiments, the first material layer 651 may be exposed to the surface facing one of the second plate portions 63 and 64 through the opening V in the second material layer 652 (see FIG. 4).

The battery module 100 in some embodiments of the present disclosure may further include a first joint portion 651A connecting one of the first plate portions 61 and 62 to the first material layer 651 and a second joint portion 652A connecting one of the second plate portions 63 and 64 to the second material layer 652.

In one or more embodiments, the first joint portion 651A may be located on an imaginary line from the opening V to the first material portion 651, and the second joint portion 652A may be located in a region that does not overlap the opening V. In an embodiment, the first joint portion 651A may be located on an imaginary line from the opening V to the first material portion 651 and may penetrate through the first region 6521, and the second joint portion 652A may be located in a portion of the second region 6522 that does not include the opening V.

In some embodiments, in the battery module 100 according to some embodiments of the present disclosure, after the coupling portion 65 is located in (e.g., inserted into or other accommodated in) the recess portion 611 of one of the first plate portions 61 and 62, heat may be applied to a portion of the first material layer 651 exposed through the opening V to melt the first material layer 651 in a direction toward one of the first plate portions 61 and 62 to form the first joint portion 651A connecting the first material layer 651 to one of the first plate portions 61 and 62 through the first region 6521 (see FIGS. 5A and 5B).

In some embodiments, in the battery module 100 according to some embodiments of the present disclosure, after one of the second plate portions 63 and 64 are arranged on the second material layer 652 in which the opening V is formed, heat may be applied to a portion of a surface of one of the second plate portions 63 and 64 not adjacent to the second material layer 652 to melt one of the second plate portions 63 and 64 in a direction toward the second region 652 to form the second joint portion 652A connecting one of the second plate portions 63 and 64 to the second region 6522 (see FIGS. 6A and 6B). In an embodiment in which the surface of the second material layer 652 adjacent to one of the second plate portions 63 and 64 includes two openings V and is symmetrically (or substantially symmetrically) arranged with respect to the imaginary vertical line passing through the center of the surface adjacent to one of the second plate portions 63 and 64, after one of the second plate portions 63 and 64 is arranged on the second material layer 652 in which the two opening V are formed, heat may be applied to a portion of the surface of one of the second plate portions 63 and 64 not adjacent to the second material layer 652 to melt one of the second plate portions 63 and 64 in the direction toward the second region 652 to form the second joint portion 652A connecting a portion of a region between the two openings V of the second region 652 and one of the second plate portions 63 and 64.

One or more edges of the second material layer 652 and the first material layer 651 may be spaced apart from each other in the first direction.

In one or more embodiments, the space created because one or more edges of the first material layer 651 and the second material layer 652 are apart from each other may be controlled by considering the mechanical properties, such as elasticity or resilience, of the second material layer 652 created when the second material layer 652 surrounds the edges of the first material layer 651.

The battery module 100 according to the present disclosure may have M in a range from approximately 0.5 to approximately 2 according to Formula 1 below, but the present disclosure is not limited thereto. $M = L 1 / L 2$ Formula 1

In one or more embodiments, L1 refers to the width in the direction perpendicular to the imaginary vertical line between the two openings V, and L2 refers to the width in the direction perpendicular to the imaginary vertical line of the opening V. For example, L1 and/or L2 may be in a range from approximately 1 mm to approximately 5 mm, such as in a range from approximately 1.5 mm to approximately 3 mm, but the present disclosure is not limited thereto.

In an embodiment in which M according to Formula 1 falls within the numerical range recited above (e.g., approximately 0.5 to approximately 2), when the first joint portion 651A formed through the opening V connects and couples one of the first plate portions 61 and 62 to the first material layer 651, the first joint portion 651A may have a thickness having excellent bonding strength. In contrast, if M is outside the upper limit of the numerical range (e.g., above approximately 2), the thickness of the first joint portion 651A formed through the opening V may decrease, and thus bonding strength between one of the first plate portions 61 and 62 and the first material layer 651 connected and coupled by the first joint portion 651A may be weakened. Additionally, if M is outside the lower limit of the numerical range (e.g., below approximately 0.5), the proportion of the opening V in the second material layer 652 may become excessively large, resulting in lowered mechanical strength of the coupling portion 65.

In some embodiments of the present disclosure, the battery module 100 may have N in a range from approximately 0.3 to approximately 0.5 according to Formula 2 below, but the present disclosure is not limited thereto. $N = L 3 / L 4$ Formula 2

In one or more embodiments, L3 refers to the thickness of the first material layer 651, and L4 refers to the thickness of the coupling portion 65. For example, in one or more embodiments, L3 may be in a range from approximately 1.5 mm to approximately 2 mm, and L4 may be about (approximately) 5 mm, but the present disclosure is not limited thereto.

In an embodiment in which N according to Formula 2 falls within the numerical range recited above (e.g., from approximately 0.3 to approximately 0.5), the first joint portion 651A connecting one of the first plate portions 61 and 62 to the first material layer 651 may be readily formed. In contrast, if N is outside the upper limit of the numerical range (e.g., greater than approximately 0.5), the thickness L3 of the first material layer 651 may become too large so that it may be difficult to form the first joint portion 651A connecting one of the first plate portions 61 and 62 to the first material layer 651. Additionally, if N is outside the lower limit of the numerical range (e.g., less than 0.3), the thickness L3 of the first material layer 651 may become too small, making it difficult to form the first joint portion 651A connecting one of the first plate portions 61 and 62 to the first material layer 651, resulting in low durability against the impact transmitted to the first material layer 651 in the process of forming the first joint portion 651A connecting one of the first plate portions 61 and 62 to the first material layer 651.

Although the disclosure has been described above with reference to limited embodiments and drawings, the disclosure is not limited thereto, and it will be apparent to persons of ordinary skill in the art to which the present disclosure pertains that various modifications and variations are possible within the scope of the technical idea of the disclosure and the equivalent scope of the patent claims to be described below.

According to embodiments of the disclosure, a battery module is provided in which battery plates including different metals are readily coupled to each other.

In addition, according to embodiments of the disclosure, a battery module includes a coupling portion that is configured to expand the range of suitable materials included in the battery plates by facilitating coupling between the battery plates including different metals.

In addition, according to embodiments of the disclosure, a battery module including a coupling portion has improved structural stability by expanding the range of selections of materials included in the battery plates by facilitating coupling between the battery plates including different metals.

However, the effects that may be obtained through the disclosure are not limited to the effects described above, and other technical effects not mentioned may be clearly understood by those skilled in the art from the description of the disclosure described below.

The present disclosure additionally includes the following numbered embodiments:
1. A battery module comprising:
   a plurality of battery cells arranged such that main surfaces thereof are adjacent to each other in a first direction;
      a first plate portion located on the main surface of a battery cell located at an outermost end among the plurality of battery cells and including a first material;
      a second plate portion located on side surfaces of the plurality of battery cells and including a second material; and
      a coupling portion arranged between the first plate portion and the second plate portion and coupling the first plate portion and the second plate portion,
      wherein the coupling portion includes
   a first material layer including the first material and a second material layer located on one surface and another surface of the first material layer, surrounding one or more edges of the first material layer, and including the second material.
2. The battery module of embodiment 1, wherein
   the first plate portion further includes a recess portion in which the coupling portion is arranged.
3. The battery module of embodiment 1 or 2, wherein
   the second material layer includes one or more openings on a surface thereof adjacent to the second plate portion.
4. The battery module of embodiment 3, wherein
   the surface of the second material layer adjacent to the second plate portion includes two openings, and, optionally,
   the two openings are arranged symmetrically with respect to an imaginary vertical line passing through a center of the surface of the second material layer adjacent to the second plate portion.
5. The battery module of embodiment 4, wherein
   M according to Formula 1 below is 0.5 to 2: [Formula 1] $M = L 1 / L 2$
   where L1 refers to a width in a direction perpendicular to the imaginary vertical line between the two openings, and L2 refers to a width in the direction perpendicular to the imaginary vertical line of each opening.
6. The battery module of any of embodiments 3-5, further comprising:
   a first joint portion connecting the first plate portion to the first material layer; and
   a second joint portion connecting the second plate portion to the second material layer.
7. The battery module of embodiment 6, wherein
   the first joint portion is located on an imaginary line extending from each opening to the first material portion.
8. The battery module of embodiment 6 or 7, wherein
   the second joint portion is located in a region that does not overlap each opening.
9. The battery module of any one of embodiments 1-8, wherein
   one or more edges of the second material layer and the first material layer is apart from each other in the first direction.
10. The battery module of any one of embodiments 1-9, wherein
   N according to Formula 2 below is 0.3 to 0.5. [Formula 2] $N = L 3 / L 4$
   where L3 refers to a thickness of the first material layer, and L4 refers to a thickness of the coupling portion.
11. A battery module comprising:
   a plurality of battery cells arranged such that main surfaces thereof are adjacent to each other in a first direction;
   a first plate portion located on the main surface of a battery cell located at an outermost end among the plurality of battery cells and including a first material;
   a second plate portion located on side surfaces of the plurality of battery cells and including a second material; and
   a coupling portion arranged between the first plate portion and the second plate portion and coupling the first plate portion and the second plate portion,
   wherein the coupling portion includes a first material layer including the first material and a second material layer including the second material,
   the second material layer includes a first region adjacent to the first plate portion, a second region adjacent to the second plate portion, and a connection portion bent such that the first region overlaps the second region to connect the first region to the second region, and
   the first material layer is located between the first region and the second region.
12. The battery module of embodiment 11, wherein
   the first plate portion further includes a recess portion in which the coupling portion is arranged.
13. The battery module of embodiment 11 or 12, wherein
   the second material layer includes one or more openings on a surface thereof adjacent to the second plate portion.
14. The battery module of embodiment 13, wherein
   the surface of the second material layer adjacent to the second plate portion includes two openings, and
   the two openings are arranged symmetrically with respect to an imaginary vertical line passing through a center of the surface of the second material layer adjacent to the second plate portion.
15. The battery module of embodiment 14, wherein
   M according to Formula 1 below is 0.5 to 2: [Formula 1] $M = L 1 / L 2$
   where L1 refers to a width in a direction perpendicular to the imaginary vertical line between the two openings, and L2 refers to a width in the direction perpendicular to the imaginary vertical line of each opening.
16. The battery module of any one of embodiments 13-15, further comprising:
   a first joint portion connecting the first plate portion to the first material layer; and
   a second joint portion connecting the second plate portion to the second material layer.
17. The battery module of embodiment 16, wherein
   the first joint portion is located on an imaginary line extending from each opening to the first material portion and penetrates through the first region.
18. The battery module of embodiment 16 or 17, wherein
   the second joint portion is located in the second region that does not include the opening.
19. The battery module of any one of embodiments 11-18, wherein
   the connection portion is apart from the first material layer.
20. The battery module of any one of embodiments 11-19, wherein
   N according to Formula 2 below is 0.3 to 0.5. [Formula 2] $N = L 3 / L 4$
   where L3 refers to a thickness of the first material layer, and L4 refers to a thickness of the coupling portion.

## Claims

1. A battery module (100) comprising:
a plurality of battery cells (10) arranged such that a plurality of main surfaces of the plurality of battery cells (10) are adjacent to each other in a first direction;
a first plate portion (61, 62) on a main surface of a battery cell (10) located at an outermost end among the plurality of battery cells (10), the first plate portion (61, 62) comprising a first material;
a second plate portion (63, 64) on side surfaces of the plurality of battery cells (10), the second plate portion (63, 64) comprising a second material; and
a coupling portion (65) between the first plate portion (61, 62) and the second plate portion (63, 64), the coupling portion (65) coupling the first plate portion (61, 62) to the second plate portion (63, 64), wherein the coupling portion (65) comprises:
a first material layer (651) including the first material; and
a second material layer (652) on one surface and another surface of the first material layer (651), surrounding one or more edges of the first material layer (651), and including the second material.

2. The battery module (100) of claim 1, wherein the first plate portion (61, 62) further comprises a recess portion (611), and wherein the coupling portion (65) is accommodated in the recess portion (611).

3. The battery module (100) of claim 1 or 2, wherein the second material layer (652) comprises at least one opening on a surface of the second material layer (652) adjacent to the second plate portion (63, 64).

4. The battery module (100) of any one of claims 1-3, wherein:
the surface of the second material layer (652) adjacent to the second plate portion (63, 64) comprises two openings, and
preferably the two openings are substantially symmetric with respect to an imaginary vertical line passing through a center of the surface of the second material layer (652) adjacent to the second plate portion (63, 64).

5. The battery module (100) of claim 4, wherein
M according to Formula 1 is in a range from approximately 0.5 to approximately 2: $M = L 1 / L 2$ Formula 1
wherein L1 is a width in a direction perpendicular to the imaginary vertical line between the two openings, and wherein L2 is a width of each of the two openings in a direction perpendicular to the imaginary vertical line.

6. The battery module (100) of any one of claims 1 to 5, further comprising:
a first joint portion (651A) connecting the first plate portion (61, 62) to the first material layer (651); and/or
a second joint portion (652A) connecting the second plate portion (63, 64) to the second material layer (652).

7. The battery module (100) of claim 6, wherein the first joint portion (651A) is located on an imaginary line extending from the at least one opening to the first material layer (651).

8. The battery module (100) of claim 6 or 7, wherein the second joint portion (652A) is located in a region that does not overlap the at least one opening.

9. The battery module (100) of any one of claims 1 to 8, wherein one or more edges of the second material layer (652) and the first material layer (651) is apart from each other in the first direction.

10. The battery module (100) of any one of claims 1 to 9, wherein N according to Formula 2 is in a range from approximately 0.3 to approximately 0.5: $N = L 3 / L 4$ Formula 2 wherein L3 is a thickness of the first material layer (651), and wherein L4 is a thickness of the coupling portion (65).

11. A battery module (100) comprising:
a plurality of battery cells (10) arranged such that a plurality of main surfaces of the plurality of battery cells (10) are adjacent to each other in a first direction;
a first plate portion (61, 62) on a main surface of a battery cell (10) located at an outermost end among the plurality of battery cells (10), the first plate portion (61, 62) comprising a first material;
a second plate portion (63, 64) located on side surfaces of the plurality of battery cells (10), the second plate portion (63, 64) comprising a second material; and
a coupling portion (65) between the first plate portion (61, 62) and the second plate portion (63, 64), the coupling portion (65) coupling the first plate portion (61, 62) to the second plate portion (63, 64),
wherein the coupling portion (65) includes a first material layer (651) including the first material and a second material layer (652) including the second material,
wherein the second material layer (652) includes a first region (6521) adjacent to the first plate portion (61, 62), a second region (6522) adjacent to the second plate portion (63, 64), and a connection portion (6523) bent such that the first region (6521) overlaps the second region (6522) to connect the first region (6521) to the second region (6522), and
wherein the first material layer (651) is located between the first region (6521) and the second region (6522).

12. The battery module (100) of claim 11, wherein the first plate portion (61, 62) further comprises a recess portion (611), and wherein the coupling portion (65) is accommodated in the recess portion (611).

13. The battery module (100) of claim 11 or 12, wherein the second material layer (652) comprises at least one opening on a surface of the second material layer (652) adjacent to the second plate portion (63, 64).

14. The battery module (100) of any one of claims 11 to 13, wherein the connection portion (6523) is spaced apart from the first material layer (651).

15. The battery module (100) of any one of claims 11 to 14, wherein N according to Formula 2 is in a range from approximately 0.3 to approximately 0.5: $N = L 3 / L 4$ Formula 2 wherein L3 is a thickness of the first material layer (651), and wherein L4 is a thickness of the coupling portion (65).
